# EUROPÄISCHE PATENTSCHRIFT

(11) **EP 1 545 963 B1**
(45) Veröffentlichungstag und Bekanntmachung des Hinweises auf die Patenterteilung: **01.03.2006**
(21) Anmeldenummer: 03807834.1
(22) Anmeldetag: 02.10.2003
(51) Int. Cl.: B62D 25/14, B60R 13/08

(54) **STIRNWAND FÜR EIN KRAFTFAHRZEUG**
BULKHEAD FOR A MOTOR VEHICLE
PAROI DE SEPARATION POUR UN VEHICULE AUTOMOBILE

(30) Priorität: 02.10.2002 DE 10246998
(43) Veröffentlichungstag der Anmeldung: 29.06.2005
(73) Patentinhaber: Faurecia Innenraum Systeme GmbH, 76767 Hagenbach (DE)
(72) Erfinder: BRAUN, Marco, 76848 Lug (DE); KOBER, Steve, 08233 Treuen OT Schreiersgrün (DE)
(74) Vertreter: Pfenning, Meinig & Partner GbR
(86) Internationale Anmeldenummer: PCT/EP2003/010954
(87) Internationale Veröffentlichungsnummer: WO 2004/033275

(56) Entgegenhaltungen:
- EP-A- 0 329 526
- EP-A- 0 523 831
- WO-A-99/15238
- DE-A- 19 946 655

## Beschreibung

Die vorliegende Erfindung betrifft eine Stirnwand für ein Kraftfahrzeug.

Eine Stirnwand für Kraftfahrzeuge ist prinzipiell bekannt. Es handelt sich dabei um eine Trennwand zwischen Motorraum und Fahrgastinnenraum. Die Stirnwand erfüllt verschiedene Aufgaben. Zum einen dient sie der Stabilität der Karosserie (z.B. gegen Torsion um die Fahrzeuglängsachse), andererseits dient sie z.B. der Crashsicherheit (gegen Eindringen von Komponenten aus dem Motorraum in den Kraftfahrzeuginnenraum bei einem Frontalcrash). Außerdem dient sie der Wärmesowie Schallisolierung zwischen Motorraum und Kraftfahrzeuginnenraum.

Stirnwände können einen "Sandwichaufbau" aufweisen. Hierbei weist die Stirnwand eine erste Wand sowie davon beabstandet eine zweite Wand auf und zwischen ererster und zweiter Wand ist Schaum angeordnet.

Nun besteht regelmäßig die Notwendigkeit, Verbindungen vom Motorraum zum Kraftfahrzeuginnenraum herzustellen und hierfür Öffnungen in der Stirnwand vorzusehen. Dies können z.B. Öffnungen zum Durchführen einer Längsstange bzw. zum Durchführen von Zuführleitungen der Klimaanlage etc. sein.

Eine gattungsgemässe Stirnwand ist aus dem Dokumment EP 0 329 526 bekannt.

Üblicherweise weist die Stirnwand hierzu Öffnungen auf, welche z.B. mit einer radialen Gummidichtung versehen sind. Die Gummidichtung hat hierbei die Aufgabe, einen durch Öffnungen der Stirnwand geführten Durchdringungskörper im Bereich der ersten bzw. zweiten Wand abzudichten, indem die Gummidichtung auf dem Durchdringungskörper entsprechend aufliegt. Hierdurch kann zumindest der Luftschallübertrag sowie der Feuchtigkeitsdurchtritt vom Motorraum in den Fahrgastinnenraum verhindert werden.

Nachteilig ist hierbei jedoch, dass Anpassung und Montage dieser Gummidichtung recht kostenintensiv sind. Hinzu kommt, dass die Gummidichtung lediglich einen begrenzten Toleranzausgleich bietet, so dass es einerseits möglich ist, dass bei einer zu engen Gummidichtung es zu einer Beschädigung der Gummidichtung beim Durchführen des Durchdringungskörpers kommt. Andererseits ist es möglich, dass bei einer zu groß gewählten Gummidichtung ein Restspalt verbleibt, hierdurch ist Feuchtigkeitseintrag bzw. Luftschallübertragung in den Fahrgastinnenraum möglich.

Der vorliegenden Erfindung liegt daher die Aufgabe zugrunde, eine Stirnwand zu schaffen, welche einerseits kostengünstig herstellbar ist und andererseits einen Feuchtigkeits- sowie Schalldurchtritt vom Motorraum zum Kraftfahrzeuginnenraum soweit wie möglich verhindert.

Diese Aufgabe wird durch eine Stirnwand nach Anspruch 1 gelöst.

Diese zeigt eine Stirnwand für ein Kraftfahrzeug, wobei die Stirnwand eine erste Wand sowie davon beabstandet eine zweite Wand aufweist und zwischen erster und zweiter Wand ein Schaum angeordnet ist. In der ersten Wand ist eine zugeordnete erste Öffnung und in der zweiten Wand eine zugeordnete zweite Öffnung zum Hindurchführen eines die Öffnungen durchdringenden Durchdringungskörpers angeordnet. Der Schaum liegt zumindest bereichsweise an dem Durchdringungskörper an. Zwischen Durchdringungskörper sowie erster und/oder zweiter Wand ist im Bereich der zugeordneten Öffnungen ein umlaufender Spalt angeordnet. Dieser Spalt kann entweder ein Luftspalt sein oder mit Schaum ausgefüllt sein. Wichtig ist jedoch, dass zwischen erster bzw. zweiter Wand und dem Durchdringungskörper keine direkte Berührung gegeben ist.

Eine solche Stirnwand hat den Vorteil, dass eine direkte Berührung zwischen Durchdringungskörper und erster bzw. zweiter Wand verhindert und somit ein Körperschallübertrag vom Durchdringungskörper auf erste bzw. zweite Wand (welche also die Außenwände des "Sandwichs" darstellen) vermieden wird. Der Schaum, welcher bis an den Durchdringungskörper reicht, verhindert hierbei den Durchtritt von Luftschall vom Motorraum in den Fahrzeuginnenraum. Außerdem wird durch den Schaum eine Barriere gegen Feuchtigkeitsdurchtritt ermöglicht.

Insbesondere vorteilhaft ist hierbei, dass zur Dichtung keine zusätzlichen Dichtelemente, wie etwa radiale Gummidichtungen, angewendet werden müssen. Hierdurch wird der Montageaufwand verringert. Zum Abdichten dient der im Sandwich sowieso vorhandene Schaum. Dieser Schaum hat somit neben einer schalldämmenden bzw. stabilisierenden Wirkung zusätzlich die Wirkung, dass er den Durchdringungskörper trägt bzw. die Durchdringungsstelle in Bezug auf Schall und Feuchtigkeiten isoliert.

Eine weitere besonders vorteilhafte Weiterbildung sieht vor, dass der Schaum eine Schaumöffnung zum Durchführen des Durchdringungskörpers aufweist, wobei die Schaumöffnung bei nicht eingeführtem Durchdringungskörper zumindest bereichsweise einen kleineren Durchmesser als der Durchdringungskörper aufweist. Hierdurch wird erreicht, dass durch den Anpressdruck des Schaums auf den Durchdringungskörper eine noch bessere schalldämmende sowie feuchtigkeitsabdichtende Wirkung gegeben ist.

Hierbei sind mehrere Varianten zur Herstellung der Stirnwand möglich. Zum einen ist es möglich, dass der Durchdringungskörper bei Herstellung der Stirnwand mit "eingeschäumt" wird. Je nach Beschaffenheit des Schaums bzw. der Oberfläche des Durchdringungskörpers (dieser kann z.B. teflonbeschichtet sein) ergibt sich dann eine feste Verbindung zwischen Schaum und Durchdringungskörper oder auch keine feste Verbindung. In einer weiteren Variante ist es möglich, dass der Durchdringungskörper beim Ausschäumen des Sandwichaufbaus noch nicht in seiner endgültigen Position ist. Hier ist es z.B. möglich, durch ein entsprechendes Formwerkzeug oder durch das Vorsehen einer (später zu entfernenden) Hülse eine Schaumöffnung für einen später einzuführenden Durchdringungskörper geschaffen wird.

Vorteilhafte Weiterbildungen der vorliegenden Erfindung werden in den abhängigen Ansprüchen angegeben.

Eine vorteilhafte Weiterbildung sieht vor, dass der Schaum ein Polyurethanschaum ist. Dies hat den Vorteil, dass eine den Innenraum ausfüllende Ausschäumung besonders leicht möglich ist. Selbstverständlich ist auch möglich, vorgefertigte Schaumabschnitte in dem Zwischenraum zwischen erster und zweiter Wand anzubringen.

Eine weitere vorteilhafte Weiterbildung sieht vor, dass die erste und/oder zweite Wand aus Metall oder Kunststoff ist und eine Wanddicke zwischen 0,6 mm und 6 mm aufweist. Hierbei sollte der E-Modul des Materials so hoch wie möglich sein. Entscheidend ist der E-Modul des Gesamtverbundes von Wänden und dazwischen liegendem Schaum, allerdings muss hier auch das Gewicht der Konstruktion berücksichtigt werden.

Eine besonders vorteilhafte Weiterbildung sieht vor, dass der Schaum im Berührbereich zum Durchdringungskörper profiliert ist. Hier kann der Schaum z.B. im Profil eine Wellenstruktur aufweisen, welche lediglich bereichsweise den Durchdringungskörper berührt. Hierdurch ist ein noch einfacheres Einführen des Durchdringungskörpers möglich, da beim Einführen der Reibungswiderstand geringer ist. Trotzdem kann im Bereich der "Wellenberge", also dem Berührbereich zwischen Schaum und Durchdringungskörper, ein besonders hoher Anpressdruck erzielt werden, welcher somit zuverlässig einen Luftschallübertrag verhindern kann. Zur Herstellung einer solchen Wellenstruktur ist es z.B. möglich, das's beim Ausschäumen mit Polyurethanschaum ein Dorn verwandt wird, welcher z.B. teflonbeschichtet ist und nach dem Schäumvorgang wieder aus dem Schaum entfernt wird.

Eine weitere vorteilhafte Weiterbildung sieht vor, dass der Schaum im Bereich mindestens einer Öffnung, z.B. der erste Öffnung im Wesentlichen bündig mit der zugeordneten Wand (also der ersten Wand) auf der von der gegenüberliegenden Wand (also der zweiten Wand) abgewandten Seite abschließt. D.'h., dass die Stirnwand an ihren Außenseiten praktisch flach mit dem Schaum abschließt. Selbstverständlich ist es auch möglich, dass der Schaum gegenüber den Außenseiten der Stirnwand nach innen zurückversetzt ist, so dass zwischen Durchdringungskörper und erster bzw. zweiter Wand im Bereich der ersten bzw. zweiten Öffnung ein Luftspalt übrig bleibt.

Außerdem sieht eine vorteilhafte Weiterbildung vor, dass der Schaum im Bereich einer Öffnung, z.B. der ersten Öffnung, die zugeordnete Wand (also die erste Wand) zur von der gegenüberliegenden Wand abgewandten Seite hin überragt. Dies heißt praktisch, dass der Schaum aus der Sandwichstruktur der Stirnwand seitlich herausragt. Hierdurch wird eine noch bessere Stützwirkung für durchgeführte Durchdringungskörper erreicht. Außerdem wird noch sicherer verhindert, dass Körperschall vom Durchdringungskörper direkt zu der ersten bzw. zweiten Wand hin übertragen wird. Außerdem ist eine noch bessere Luftschalldämmung möglich durch die längere Schaumlänge entlang dem Durchdringungskörper. Besonders vorteilhaft ist auch ein noch besserer Toleranzausgleich, da der flexible Schaum sich entlang der vollen Länge des Durchdringungskörpers an diesen anlegen kann und somit ein Luftschallübertrag noch sicherer verhindert wird.

Eine weitere vorteilhafte Weiterbildung sieht vor, dass der Durchdringungskörper z.B. rund ist und einen Durchmesser zwischen aufweist. Hierbei kann es sich z.B. um eine relativ zum Schaum drehbare Lenkstange etc. handeln, es ist jedoch auch möglich, dass es sich hierbei um ein Aluminiumrohr handelt, welches zur Übertragung von Flüssigkeiten (z.B. für die Klimaanlage) vom Motorraum hin zum Kraftfahrzeuginnenraum erstreckt.

Eine weitere Weiterbildung sieht vor, dass der Durchdringungskörper als Hülse zum Durchführen von Stangen, Kabeln oder dergleichen ausgeführt ist. Es ist zwar eigentlich vorteilhaft, dass der Durchdringungskörper z.B. von einer Rohrleitung selbst gebildet wird und direkten Kontakt mit dem Schaum hat. Die Variante des Durchdringungskörpers als Hülse zum Durchführen von Stangen etc. ist jedoch für Fälle möglich, in welchen eine sonst zu starke Relativbewegung z.B. einer Stange zu dem Schaum gegeben wäre.

Eine weitere vorteilhafte Weiterbildung sieht vor, dass der Spalt zwischen Durchdringungskörper und Wand im Bereich der zugeordneten Öffnung zwischen 5 mm und 20 mm beträgt. Hierdurch wird gewährleistet, dass auch bei vibrierender Stirnwand ein Körperschallübertrag durch Berührung von Durchdringungskörper sowie erster bzw. zweiter Wand verhindert wird.

Eine weitere vorteilhafte Weiterbildung sieht vor, dass eine Wand, z.B. die erste Wand, im Bereich der zugeordneten ersten Öffnung zur von der jeweils gegenüberliegenden Wand (hier also der zweiten Wand) abgewandten Seite innen gekrümmt ist. Dies heißt praktisch, dass im Bereich der Öffnung eine Auswölbung der Stirnwand zu einer Außenseite hin gegeben ist. Hierdurch wird, insbesondere bei einem schrägen Durchtritt des Durchdringungskörpers durch das Sandwich, eine noch längere tragende Länge des Durchdringungskörpers im Schaum ermöglicht. Neben verbesserter Stabilität wird hierbei eine noch bessere akustische Dämpfung und ein entsprechend guter Toleranzausgleich gewährleistet.

Eine weitere vorteilhafte Weiterbildung sieht vor, dass eine Wand, z.B. die erste Wand, wenn diese die motorraumseitige Wand darstellt, im Bereich der dazugehörigen ersten Öffnung eine zusätzlich Abdichtlippe zur Umfassung des Durchdringungskörpers aufweist. Hierdurch kann ein effektiver Spritzschutz gewährleistet werden, auch Mehrfachdichtungen sind hier möglich.

Zur vereinfachten Montage kann vorgesehen werden, dass die Schaumöffnung sich im Verlauf der Montagerichtung des Durchdringungskörpers verengt, so dass eine noch einfachere Montage (bei möglichst geringer Beschädigung des Schaums) erzielt wird.

Weitere vorteilhafte Weiterbildungen der vorliegenden Erfindung werden in den übrigen abhängigen Ansprüchen angegeben.

Die Erfindung wird nun anhand mehrerer Figuren erläutert. Es zeigen:
- Fig. 1: einen ersten Ausschnitt einer erfindungsgemäßen Stirnwand mit darin angeordnetem Durchdringungskörper,
- Fig. 2: einen zweiten Ausschnitt der erfindungsgemä- ßen Stirnwand mit einem weiteren darin angeordneten Durchdringungskörper.

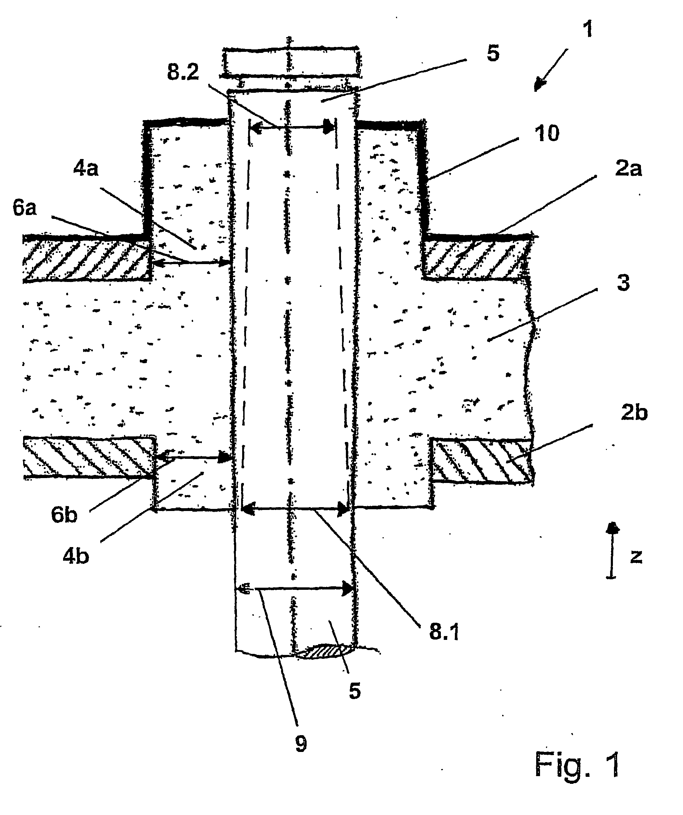

Fig. 1 zeigt eine Stirnwand 1 für ein Kraftfahrzeug. Die Stirnwand weist eine erste Wand 2a sowie davon beabstandet eine zweite Wand 2b auf. Zwischen erster und zweiter Wand ist Schaum 3 angeordnet. Die erste Wand 2a weist eine zugeordnete erste Öffnung 4a und die zweite Wand 2b weist eine zugeordnete zweite Öffnung 4b auf. Ein Durchdringungskörper 5 durchdringt die erste Öffnung 4a sowie die dazu fluchtende Öffnung 4b. Der Schaum 3 liegt hierbei an dem Durchdringungskörper 5 an, er umschließt ihn in Fig. 1 zylindrisch.

Zwischen Durchdringungskörper 5 sowie erster Öffnung 4a ist ein mit Schaum ausgefüllter Spalt 6a angeordnet.

Zwischen Durchdringungskörper 5 sowie zweiter Wand ist im Bereich der zweiten Öffnung 4b ein mit Schaum ausgefüllter umlaufender Spalt 6b vorgesehen, welcher ebenfalls mit Schaum ausgefüllt ist.

Der Schaum ist aus Polyurethan, die erste Wand 2a sowie die zweite Wand 2b sind jeweils aus Kunststoff. Bezüglich näherer Material- bzw. Geometrieangaben wird auf die Beschreibungseinleitung verwiesen.

Die Spalte 6a bzw. 6b haben eine Ausdehnung von 4 mm bis 35 mm, möglich sind auch 5 mm bis 20 mm (siehe Bemessungspfeile in Fig. 1).

Der Durchdringungskörper 5 ist ein Aluminiumrohr, welches einen Anschluss/Verdampfer/Wärmetauscher darstellt und somit z.B. Kondenswasser der Klimaanlage zwischen Fahrgastinnenraum und Motorraum transportiert. Für alle Durchdringungskörper 5 nach dieser Erfindung ist sowohl eine runde, ovale, mehreckige etc. Querschnittsform möglich. Es ist aufgrund von Sicherheitsbestimmungen notwendig, dass dieses Rohr aus einem so stabilen Material wie Aluminium gebaut ist. Insbesondere hier kommen die vorteilhaften Eigenschaften der vorliegenden Erfindung zum Tragen, da es bei einer Berührung von erster Wand 2a bzw. zweiter Wand 2b mit dem Durchdringungskörper 5 zu einer starken Körperschallübertragung führen würde. Durch den zwischenliegenden Schaum wird daher eine entsprechende Körperschallübertragung minimiert. Zusätzlich kann zur Verringerung von auf das Aluminiumrohr übertragenen Vibrationen ein Teil dieses Aluminiumrohrs durch einen entsprechenden Kunststoffschlauch im Motorraum überbrückt werden.

Eine besonders gute Führung des Durchdringungskörpers 5 sowie ein besonders sicherer Schutz des Körperschallübertrags von Durchdringungskörper 5 zu erster Wand 2a bzw. zweiter Wand 2b wird dadurch erreicht, dass der Schaum auf den Außenseiten der Stirnwand 1 die erste bzw. zweite Wand jeweils an den Außenseiten überragt. Hierdurch wird eine ausreichende Führungslänge des Schaums 3 zu dem Durchdringungskörper 5 hin erreicht, wodurch sich zum einen eine gute Abdichtwirkung und außerdem eine stabile Führung ergibt.

Der Schaum 3 wurde als Polyurethanschaum ausgeschäumt, die Schaumöffnung zum Durchführen des Durchdringungskörpers 5 wurde hierbei durch einen entsprechenden teflonbeschichteten Dorn, welcher nach dem Ausschäumvorgang entfernt wurde, freigehalten.

Zur besseren Verdeutlichung des Zusammenhangs ist der (gleichmäßige) Durchmesser 9 des Durchdringungskörpers 5 in Fig. 1 gezeigt. Mit einer gestrichelte Linie ist der Durchmesser der Schaumöffnung angedeutet. Mit "Schaumöffnung" ist die von dem Dorn verursachte Öffnung im Schaum bezeichnet, in welche der Durchdringungskörper 5 in Richtung z eingeführt wurde. Hierbei ist der Durchmesser der Schaumöffnung eingangsseitig mit 8.1 bezeichnet. In Montagerichtung Z verringert sich dieser Durchmesser bis auf das Maß 8.2. Durch das Mindermaß der Schaumöffnung gegenüber dem Durchmesser des Durchdringungskörpers 5 wird ein festes Anliegen des Schaums am Durchdringungskörper und somit eine gute Luftschalldämmung sowie Feuchtigkeitsbarriere gewährleistet.

Auf der in Fig. 1 gezeigten Oberseite der Stirnwand ist eine Schutzschicht 10 auf der ersten Wand 2a bzw. dem herausstehenden Teil des Schaums 3 angebracht. Hierbei kann es sich z.B. um eine aufgedampfte Aluminiumschicht handeln, welche eine elektrische Aufladung von Teilen der Wand bzw. des Durchdringungskörpers verhindert. Alternativ kann hier auch eine Kunststofffolie etc. zum noch besseren Abdichten gegen Flüssigkeitseintrag angebracht sein.

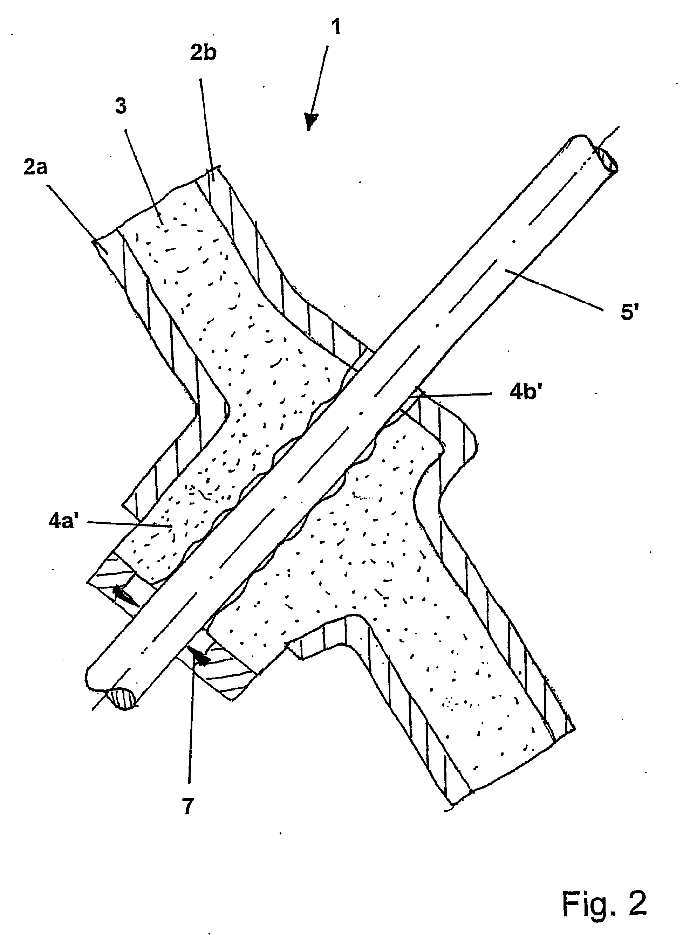

Fig. 2 zeigt einen anderen Abschnitt der Stirnwand 1. Sämtliche der oben beschriebenen Merkmale (zu Fig. 1 sowie der Beschreibungseinleitung) gelten auch für die Beschreibung von Fig. 2, sofern nicht ausdrücklich etwas anderes gesagt wird. Bei dem in Fig. 2 gezeigten Durchdringungskörper handelt es um eine Lenkstange 5', welche um ihre Längsachse drehbar ist. Der Schaum 3, welcher zwischen erster Wand 2a und zweiter Wand 2b angeordnet ist, ragt im Bereich der ersten Öffnung 4a' über diese Öffnung hinaus. Im Bereich der zweiten Wand 2b ragt der Schaum nicht in die Öffnung 4b' der Wand 2b hinein, so dass im Bereich der Öffnung 4b' lediglich ein Luftspalt zwischen Durchdringungskörper 5' und der angrenzenden Wand 2b gegeben ist.

Sowohl im Bereich der ersten Öffnung 4a' als auch im Bereich der zweiten Öffnung 4b' sind die Wände in Fig. 2 jeweils nach außen hin gekrümmt. Hierdurch ergibt sich eine größere Führungslänge des Schaums 3 für den Durchdringungskörper 5'.

Im Unterschied zu Fig. 1 ist der Schaum 3 im Berührbereich mit dem Durchdringungskörper 5' im Querschnitt profiliert. D.h., dass entlang der Längsachse des Durchdringungskörpers 5' der Schaum beabstandet Einschnürungen aufweist, im Bereich dieser Einschnürungen ist eine Berührung von Schaum und Durchdringungskörper gegeben. Hierdurch wird ein leichteres Drehen des Durchdringungskörpers 5' erreicht, da weniger Reibarbeit zu verrichten ist. Dem Schaum 3 vorgeschaltet ist im Bereich der ersten Öffnung 4' eine zusätzliche Manschette mit Gummilippe 7, welche einen Spritzschutz gegen Flüssigkeit bietet.

Die vorliegende Erfindung beschreibt also eine Stirnwand für ein Kraftfahrzeug, wobei die Stirnwand eine erste Wand sowie davon beabstandet eine zweite Wand aufweist, und zwischen erster und zweiter Wand ein Schaum angeordnet ist sowie in der ersten Wand eine zugeordnete erste Öffnung und in der zweiten Wand eine zugeordnete zweite Öffnung zum Hindurchführen eines die Öffnungen durchdringenden Durchdringungskörpers angeordnet sind, wobei derselbe Schaum, welcher flächig zwischen erster und zweiter Wand angeordnet ist, zumindest bereichsweise an dem Durchdringungskörper anliegt und zwischen Durchdringungskörper sowie erster und/oder zweiter Wand im Bereich der zugeordneten Öffnungen ein umlaufender Spalt angeordnet ist. Insbesondere auch durch die Tatsache, dass ein und derselbe Schaum verwendet wird für die Stirnwandisolation sowie für das Anliegen des Durchdringungskörpers werden die erfindungsgemäßen Vorteile erreicht. Es handelt sich bei der in der vorliegenden Erfindung gezeigten Stirnwand nicht um eine separate Stirnwandisolation, sondern um eine zweiwandige Stirnwand in Sandwichbauweise, welche aus zwei miteinander verschäumten Deckschichten besteht. Die Grundidee dabei ist das gleichzeitige Anschäumen eines Dichtkragens, so dass kein separates Teil (etwa ein Blähschaumeinsatz) notwendig ist. Somit ist auch keinerlei Fügung eines solchen separaten Dichtkragens notwendig.

## Patentansprüche

1. Stirnwand (1) für ein Kraftfahrzeug, wobei die Stirnwand eine erste Wand (2a) sowie davon beabstandet eine zweite Wand (2b) aufweist und zwischen erster und zweiter Wand ein Schaum (3) angeordnet ist sowie in der ersten Wand eine zugeordnete erste Öffnung (4a) und in der zweiten Wand eine zugeordnete zweite Öffnung (4b) zum Hindurchführen eines die Öffnungen durchdringenden Durchdringungskörpers (5) angeordnet sind, **dadurch gekennzeichnet dass** der Schaum (3) zumindest bereichsweise an dem Durchdringungskörper (5) anliegt und zwischen Durchdringungskörper sowie erster (2a) und/oder zweiter (2b) Wand im Bereich der zugeordneten Öffnungen (4a; 4b) ein umlaufender Spalt (6a: 6b) angeordnet ist, und dass der Schaum (3) eine Schaumöffnung zum Durchführen des Durchdringungskörpers (5) aufweist, wobei die Schaumöffnung bei nicht eingeführtem Durchdringungskörper zumindest bereichsweise einen kleineren Durchmesser als der Durchdringungskörper aufweist.

2. Stirnwand nach Anspruch 1, **dadurch gekennzeichnet, dass** der Schaum (3) ein Polyurethanschaum ist.

3. Stirnwand nach einem der vorhergehenden Ansprüche, **dadurch gekennzeichnet, dass** die erste (2a) und/oder zweite Wand (2b) aus Metall oder Kunststoff ist und eine Wanddicke zwischen 1 mm und 30 mm aufweist.

4. Stirnwand nach einem der vorhergehenden Ansprüche, **dadurch gekennzeichnet, dass** der Schaum (3) im Berührbereich zum Durchdringungskörper (5) profiliert ist.

5. Stirnwand nach einem der vorhergehenden Ansprüche, **dadurch gekennzeichnet, dass** der Schaum (3) im Bereich mindestens einer Öffnung (4a) im Wesentlichen bündig mit der zugeordneten Wand (2a) auf der von der gegenüberliegenden Wand (2b) abgewandten Seite abschließt.

6. Stirnwand nach einem der vorhergehenden Ansprüche, **dadurch gekennzeichnet, dass** der Schaum (3) im Bereich einer Öffnung (4a) die zugeordnete Wand (2a) zur von der gegenüberliegenden Wand (2b) abgewandten Seite hin überragt.

7. Stirnwand nach einem der vorhergehenden Ansprüche, **dadurch gekennzeichnet, dass** der Durchdringungskörper (5) im Querschnitt rund, oval oder mehreckig ist.

8. Stirnwand nach einem der vorhergehenden Ansprüche, **dadurch gekennzeichnet, dass** der Durchdringungskörper (5) als Hülse zum Durchführen von Stangen, Kabeln oder dergleichen ausgeführt ist.

9. Stirnwand nach einem der vorhergehenden Ansprüche, **dadurch gekennzeichnet, dass** der Spalt (6a, 6b) zwischen Durchdringungskörper (5) und einer Wand (2a) im Bereich der zugeordneten Öffnung (4a) zwischen 4 und 35 mm beträgt.

10. Stirnwand nach einem der vorhergehenden Ansprüche, **dadurch gekennzeichnet, dass** eine Wand (2a) im Bereich der zugeordneten Öffnung (4a) zur von der jeweils gegenüberliegenden Wand (2b) abgewandten Seite hin gekrümmt ist.

11. Stirnwand nach einem der vorhergehenden Ansprüche, **dadurch gekennzeichnet, dass** eine Wand im Bereich der dazugehörigen Öffnung eine zusätzliche Abdichtlippe (7) aufweist.

12. Stirnwand nach Anspruch 1, **dadurch gekennzeichnet, dass** der Durchmesser der Schaumöffnung sich in Montagerichtung (z) des Durchdringungskörpers (5) verjüngt.

## Claims

1. Front wall (1) for a motor vehicle, where the front wall comprises a first wall (2a) as well as distanced therefrom a second wall (2b), and between first and second wall is placed a foam (3), and in the first wall is arranged an associated first opening (4a) and in the second wall an associated second opening (4b) for passing through a penetrating body (5) which penetrates the openings, **characterised in that** the foam abuts the penetrating body (5) at least in some areas, and between penetrating body as well as first (2a) and/or second (2b) wall in the area of associated openings (4a; 4b) is arranged a peripheral gap (6a; 6b), and the foam (3) comprises a foam opening for passing the penetrating body (5), and the foam opening with not inserted penetrating body has at least in some areas a smaller diameter than the penetrating body.

2. Front wall according to Claim 1, **characterised in that** the foam (3) is a polyurethane foam.

3. Front wall according to one of the above claims, **characterised in that** the first (2a) and/or second wall (2b) is made of metal or plastic with a wall thickness between 1 mm and 30 mm.

4. Front wall according to one of the above claims, **characterised in that** the foam (3) is profiled in the contact area to the penetrating body (5).

5. Front wall according to one of the above claims, **characterised in that the** foam in the area of at least one opening (4a) is substantially positively sealing with the associated wall (2a) and the side facing away from the opposite wall (2b).

6. Front wall according to one of the above claims, **characterised in that** the foam (3) in the area of an opening (4a) protrudes over the associated wall (2a) toward the side facing away from the opposite wall (2b).

7. Front wall according to one of the above claims, **characterised in that** the penetrating body (5) is cross-sectionally round, oval or polygonal.

8. Front wall according to one of the above claims, **characterised in that** the penetrating body (5) is designed as a sleeve for passing through bars, cables or the like.

9. Front wall according to one of the above claims, **characterised in that** the gap (6a, 6b) between penetrating body (5) and a wall (2a) in the area of the associated opening (4a) lies between 4 and 35 mm.

10. Front wall according to one of the above claims, **characterised in that** a wall (2a) in the area of the associated opening (4a) is curved towards the respective side opposite and facing away from wall (2b).

11. Front wall according to one of the above claims, **characterised in that** a wall in the area of the associated opening comprises an additional sealing lip (7).

12. Front wall according to Claim 1, **characterised in that** the diameter of the foam opening narrows in the assembly direction (z) of the penetrating body (5).

## Revendications

1. Paroi de séparation (1) pour un véhicule, dans laquelle la paroi de séparation comporte une première paroi (2a) et une seconde paroi (2b) distante de la première et dans laquelle une mousse (3) est disposée entre la première et la seconde paroi et dans laquelle un premier orifice (4a) associé à la première paroi et un second orifice (4b) associé à la seconde paroi sont disposés pour l'introduction d'un corps de pénétration (5) pénétrant dans un des orifices, **caractérisée en ce que** la mousse (3) est en contact au moins partiellement avec le corps de pénétration (5) et **en ce qu'**une fente circulaire (6a ; 6b) est disposée entre le corps de pénétration et la première (2a) et/ou la seconde paroi (2b) dans la zone des orifices correspondants (4a ; 4b) et **en ce que** la mousse (3) comporte un orifice pour introduire le corps de pénétration (5), l'orifice de la mousse présentant un diamètre au moins partiellement inférieur à celui du corps de pénétration lorsque ce dernier n'est pas introduit.

2. Paroi de séparation selon la revendication 1, **caractérisée en ce que** la mousse (3) est une mousse de polyuréthane.

3. Paroi de séparation selon l'une quelconque des revendications précédentes, **caractérisée en ce que** la première (2a) et/ou la seconde paroi (2b) est en métal ou en plastique et présente une épaisseur comprise entre 1 mm et 30 mm.

4. Paroi de séparation selon l'une quelconque des revendications précédentes, **caractérisée en ce que** la mousse (3) est profilée dans la zone de contact avec le corps de pénétration (5).

5. Paroi de séparation selon l'une quelconque des revendications précédentes, **caractérisée en ce que** la mousse (3) se termine à proximité d'au moins un orifice (4a) sensiblement à fleur de la paroi correspondante (2a) sur le côté opposé à la paroi (2b) située en face.

6. Paroi de séparation selon l'une quelconque des revendications précédentes, **caractérisée en ce que** la mousse (3) déborde à proximité d'un orifice (4a) de la paroi associée (2a) vers le côté opposé de la paroi (2b) située en face.

7. Paroi de séparation selon l'une quelconque des revendications précédentes, **caractérisée en ce que** le corps de pénétration (5) en coupe transversale est circulaire, ovale ou à plusieurs angles.

8. Paroi de séparation selon l'une quelconque des revendications précédentes, **caractérisée en ce que** le corps de pénétration (5) est conçu comme un fourreau pour l'introduction de tiges, câbles ou autres.

9. Paroi de séparation selon l'une quelconque des revendications précédentes, **caractérisée en ce que** la fente (6a, 6b) entre le corps de pénétration (5) et une paroi (2a) est comprise entre 4 et 35 mm dans la zone de l'orifice correspondant.

10. Paroi de séparation selon l'une quelconque des revendications précédentes, **caractérisée en ce qu'**une paroi (2a) est courbée dans la zone de l'orifice correspondant (4a) par rapport au côté opposé de la paroi (2b) située en face.

11. Paroi de séparation selon l'une quelconque des revendications précédentes, **caractérisée en ce qu'**une paroi comporte des lèvres d'étanchéité (7) supplémentaire dans la zone de l'orifice associé.

12. Paroi de séparation selon la revendication 1, **caractérisée en ce que** le diamètre de l'orifice de mousse se rétrécit dans le sens de montage (z) du corps de pénétration (5).
